# FASCICULE DE BREVET EUROPEEN

(11) **EP 2 740 669 B1**
(45) Date de publication et mention de la délivrance du brevet: **26.12.2018**
(21) Numéro de dépôt: 13193710.4
(22) Date de dépôt: 20.11.2013
(51) Int. Cl.: B64G 1/22, B65H 75/34, B64G 1/44, B64G 1/50, B64G 1/66

(54) **Dispositif de déploiement et de reploiement d'une structure flexible, structure déployable flexible et satellite munis d'un tel dispositif**
Vorrichtung zum Entfalten und Zusammenfalten einer flexiblen Struktur, flexible entfaltbare Struktur und mit einer solchen Vorrichtung ausgestatteter Satellit
Device for deploying and retracting a flexible structure, flexible deployable structure and satellite provided with such a device

(30) Priorité: 05.12.2012 FR 1203300
(43) Date de publication de la demande: 11.06.2014
(73) Titulaire: Thales, 92400 Courbevoie (FR); Centre National d'Etudes Spatiales, 75039 Paris Cedex 01 (FR)
(72) Inventeur: Baudasse, Yannick, 06150 CANNES LA BOCCA (FR); Vezain, Stéphane, 06150 CANNES LA BOCCA (FR); Boulanger, Bernard, 06150 CANNES LA BOCCA (FR); Guinot, François, 06150 CANNES LA BOCCA (FR)
(74) Mandataire: Esselin, Sophie

(56) Documents cités:
- EP-A2- 0 319 921
- EP-A2- 1 236 643
- FR-A1- 2 868 094
- US-A1- 2011 210 209

## Description

La présente invention concerne un dispositif de déploiement et de reploiement d'une structure flexible, une structure déployable flexible et un satellite munis d'un tel dispositif. Elle s'applique notamment au domaine des équipements spatiaux qui doivent être déployés en orbite et plus particulièrement aux équipements spatiaux pour satellites, tels que des antennes, des générateurs solaires, des écrans thermiques, des baffles ou des télescopes.

Les structures déployables dans l'espace, de type générateur solaire par exemple, sont généralement constituées de panneaux rigides articulés entre eux, ces panneaux étant, en position stockée, empilés les uns au-dessus des autres. Ces structures ont l'avantage d'avoir une cinématique maîtrisée mais présentent le désavantage d'une masse surfacique et d'une inertie importantes. En outre, les structures rigides occupent, en position stockée, un encombrement important sous la coiffe d'un lanceur. L'espace alloué, aux structures déployables, sous la coiffe d'un lanceur, étant limité, il est important de réduire l'encombrement de ces structures déployables lorsqu'elles sont en position stockée de façon à en optimiser la surface en position déployée. Pour cela, il est connu d'utiliser des structures déployables flexibles comme décrit notamment dans le document US2011/0210209 et dans le document EP1236643. Un exemple de ruban flexible est décrit dans le document EP 0319921. Le document FR 2868094 décrit d'utiliser un ruban préformé à mémoire de forme étant monté plié en deux en forme de U à deux branches pour autoriser ou non un accès dans un système de contrôle d'accès à barrière automatique.

Il existe des structures planes flexibles déployables comportant une toile flexible et des mètres-ruban (en anglais : tape-spring) fixés sur un même plan de la toile. En position stockée, la toile et les mètres-ruban sont enroulés autour d'un mandrin. Le déploiement de la structure plane flexible est assuré de manière autonome par le déroulement spontané des mètres-ruban lorsque le mandrin est libre en rotation.

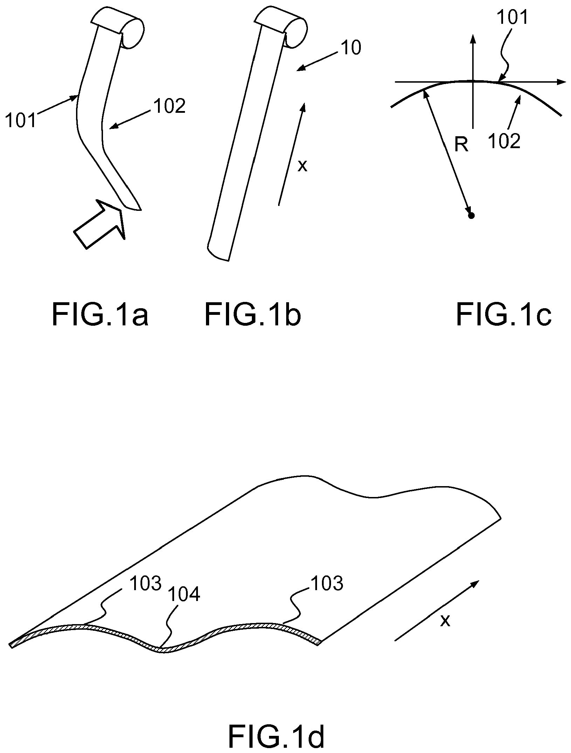

En effet, comme représenté sur les figures 1a, 1b, 1c, les mètres-ruban sont connus dans le domaine spatial comme étant des rubans flexibles ayant une section en arc de cercle dont le rayon de courbure est convexe sur une première face et concave sur une deuxième face, ces rubans étant aptes à passer de l'état enroulé à l'état déroulé essentiellement grâce à leur énergie élastique propre. Les mètres-ruban ont donc une tendance naturelle à se déployer pour se retrouver dans leur état déroulé. Si on les force à se reployer, ils ont tendance à le faire sur un rayon sensiblement égal à celui de leur rayon de courbure R transversal. Il faut donc un effort extérieur faible pour les maintenir enroulés sous cette forme. Cependant, si cet effort est brutalement supprimé, le dépliement peut être violent et incontrôlé, c'est-à-dire que tout le mètre-ruban peut avoir tendance à se remettre droit simultanément, sur toute sa longueur, ce qui pose un risque d'endommagement de la toile flexible sur laquelle il est fixé, ou des éléments environnants. Les mètres-ruban classiques peuvent ainsi présenter des difficultés en termes de contrôle de leur déploiement. En outre, les mètres-ruban n'ont pas la même raideur sur leurs deux faces 101, 102, convexe et concave, leur face convexe 101 étant flexible alors que leur face concave 102 est rigide. Il en résulte qu'à l'état déroulé, le moindre effort, flèche sur la figure 1a, appliqué sur la face convexe 101 du mètre-ruban va avoir tendance à faire fléchir le mètre-ruban alors qu'un effort appliqué sur la face concave 102 n'aura aucun effet, ce qui pose un problème d'instabilité de la structure flexible dans son état déployé. Pour résoudre ce problème de stabilité de l'état déployé, il est alors nécessaire de maintenir la toile en position déployée par un dispositif de maintien supplémentaire ou de sur-dimensionner le mètre-ruban pour qu'il reste stable sous les efforts orbitaux.

Le but de l'invention est de réaliser un dispositif de déploiement et de reploiement d'une structure déployable ne comportant pas les inconvénients des dispositifs existants, présentant l'avantage d'être peu encombrant, simple à réaliser, présentant une optimisation du volume de la structure déployable lorsqu'elle est stockée sous la coiffe d'un lanceur, permettant la maîtrise du déploiement et une capacité de reploiement et permettant une rigidité et une stabilité de la structure lorsqu'elle est déployée sans utiliser de dispositif de maintien additionnel.

Pour cela, l'invention concerne un dispositif de déploiement et de reploiement d'une structure flexible comportant au moins un mètre-ruban ayant un axe de déploiement et de reploiement parallèle à un axe X et un rotor mobile en rotation autour d'un axe Y perpendiculaire à l'axe X, le mètre-ruban étant apte à passer, de façon autonome, d'un état enroulé autour du rotor à un état déroulé. Le mètre-ruban est monté plié en deux en forme de U à deux branches et comporte une première extrémité d'une première branche fixée rigidement à un premier ancrage et une deuxième extrémité d'une deuxième branche fixée rigidement à un deuxième ancrage solidaire du rotor, la première extrémité de la première branche du mètre-ruban étant montée entre deux mâchoires du premier ancrage et le dispositif comportant en outre au moins un équipement spatial à déployer fixé sur le au moins un mètre-ruban.

Avantageusement, le deuxième ancrage est constitué de deux mâchoires de formes complémentaires montées en vis-à-vis, la deuxième extrémité de la deuxième branche du mètre-ruban étant montée entre les deux mâchoires du deuxième ancrage.

Avantageusement, le dispositif de déploiement et de reploiement peut comporter en outre au moins deux galets montés en vis-à-vis sur une ferrure fixe supportant l'axe de rotation du rotor, la deuxième branche du mètre-ruban solidaire du rotor étant encastrée entre les deux galets.

Avantageusement, le dispositif de déploiement et de reploiement peut comporter en outre un dispositif de régulation d'une vitesse de déploiement couplé au rotor.

Avantageusement, le dispositif de déploiement et de reploiement peut comporter en outre au moins une membrane flexible à deux dimensions XY, le mètre-ruban étant fixé sur la membrane flexible, parallèlement à l'axe de déploiement et de reploiement X du mètre-ruban.

Avantageusement, le dispositif de déploiement et de reploiement peut comporter au moins deux mètres-ruban fixés parallèlement entre eux et parallèlement à l'axe X sur la membrane flexible, chaque mètre-ruban étant monté plié en deux, la première extrémité de chaque mètre-ruban étant fixée rigidement au premier ancrage et la deuxième extrémité de chaque mètre-ruban étant fixée rigidement au deuxième ancrage solidaire du rotor.

Avantageusement, la membrane flexible peut comporter des lattes latérales orthogonales à l'axe X, les lattes latérales étant respectivement fixées sur chaque mètre-ruban.

Selon un premier mode de réalisation de l'invention, le dispositif de déploiement et de reploiement comporte en outre au moins un stator fixe et le premier ancrage est solidaire du stator.

Selon un deuxième mode de réalisation de l'invention, le premier ancrage est solidaire du rotor et le dispositif de déploiement et de reploiement comporte deux premiers galets montés en vis-à-vis sur la ferrure et deux seconds galets montés en vis-à-vis sur la ferrure, la deuxième branche du mètre-ruban étant encastrée entre les deux premiers galets, la première branche du mètre-ruban étant encastrée entre les deux seconds galets.

Avantageusement, le dispositif de déploiement et de reploiement peut comporter au moins deux mètres-rubans montés en opposition sur un même rotor, chaque mètre-ruban étant monté plié en deux et comportant deux extrémités fixées respectivement sur le même stator par des premiers ancrages et sur le rotor par des deuxièmes ancrages.

Alternativement, le dispositif de déploiement et de reploiement peut comporter au moins trois mètres-rubans montés en étoile sur un même rotor, chaque mètre-ruban étant monté plié en deux et comportant deux extrémités fixées respectivement sur le même stator par des premiers ancrages et sur le rotor par des deuxièmes ancrages.

Selon un mode de réalisation particulier, le dispositif de déploiement et de reploiement peut comporter au moins deux stators parallèles à l'axe Y, les deux stators étant montés de part et d'autre du rotor et deux structures flexibles montées en opposition sur le rotor, chaque structure flexible comportant une membrane flexible à deux dimensions XY et au moins un mètre-ruban fixé plié en deux sur la membrane flexible, le mètre-ruban comportant une première extrémité fixée rigidement sur l'un des deux stators et une deuxième extrémité fixée sur le rotor.

Avantageusement, le mètre-ruban peut être une tôle ondulée.

L'invention concerne aussi une structure déployable flexible comportant au moins un dispositif de déploiement et de reploiement.

Avantageusement, la structure déployable flexible peut comporter en outre un mât articulé déployable.

Avantageusement, le mât articulé peut être fixé sur la plateforme d'un satellite par l'intermédiaire d'un moteur d'entraînement en rotation.

Avantageusement, la structure déployable flexible peut comporter deux demi-ailes de générateur solaire montées dos à dos de part et d'autre d'une ligne médiane de la structure déployable, la ligne médiane étant perpendiculaire à l'axe X de déploiement et de reploiement des deux demi-ailes, et deux dispositifs de déploiement et de reploiement indépendants respectivement dédiés aux deux demi-ailes, chaque dispositif de déploiement et de reploiement comportant un rotor respectif, les deux rotors des deux dispositifs de déploiement et de reploiement ayant des axes de rotation respectifs parallèles entre eux.

Avantageusement, la structure déployable flexible peut comporter une première membrane flexible fixée sur la première branche du mètre-ruban plié en deux et une deuxième membrane flexible fixée sur la deuxième branche du même mètre-ruban, la première membrane flexible supportant des premiers objets et la deuxième membrane flexible supportant des seconds objets différents des premiers objets.

Selon un exemple de réalisation particulier, les premiers objets peuvent être des cellules solaires et les seconds objets peuvent être des lentilles de concentration de la lumière et la deuxième membrane flexible est transparente aux rayons lumineux.

L'invention concerne également un satellite comportant au moins une structure déployable flexible.

D'autres particularités et avantages de l'invention apparaîtront clairement dans la suite de la description donnée à titre d'exemple purement illustratif et non limitatif, en référence aux dessins schématiques annexés qui représentent :
- figures 1a, 1b : deux schémas en perspective d'un premier exemple de mètre-ruban à un seul rayon de courbure respectivement en cours de pliage et au repos;
- figure 1c : un schéma de la section du premier exemple de mètre-ruban;
- figure 1d : un schéma, en perspective, d'un deuxième exemple de mètre-ruban à plusieurs rayons de courbure;
- figures 2a, 2b, 2c : trois schémas en perspective illustrant un exemple de dispositif de déploiement et de reploiement, respectivement en position stockée, en cours de déploiement et en position déployée, selon un premier mode de réalisation de l'invention ;
- figures 3a à 3d : quatre schémas, en coupe longitudinale, du premier exemple de dispositif de déploiement et de reploiement correspondant respectivement à quatre états de déploiement différents, selon l'invention ;
- figures 3e et 3f : deux schémas, en coupe transversale, illustrant deux exemples différents d'ancrage du mètre-ruban, selon l'invention ;
- figures 4a à 4c : trois schémas, en coupe longitudinale, illustrant un exemple de dispositif de déploiement et de reploiement comprenant un moyen de guidage par galets, selon l'invention ;
- figures 4d à 4f : trois schémas, en coupe transversale, illustrant trois exemples de moyen de guidage par galets, selon l'invention ;
- figures 5a à 5c ; trois schémas, en coupe longitudinale, illustrant un exemple de dispositif de déploiement et de reploiement comprenant deux moyens de guidage par galets, selon l'invention ;
- figures 6a et 6b : deux schémas, en coupe longitudinale, d'un exemple de dispositif de déploiement et de reploiement comportant deux mètres-ruban montés en opposition, en configuration déployée, selon un deuxième mode de réalisation de l'invention ;
- figure 7 : un schéma, en coupe longitudinale, d'un exemple de dispositif de déploiement et de reploiement comportant trois mètres-ruban montés en étoile, en configuration déployée, selon un troisième mode de réalisation de l'invention ;
- figure 8a : un schéma en perspective d'un dispositif de déploiement et de reploiement d'une structure déployable comportant trois mètres-ruban élémentaires fixés sur une toile flexible, en configuration déployée, selon l'invention ;
- figures 8b, 8c et 8d : trois exemples, en coupe transversale, d'une membrane flexible comportant des lattes latérales fixées sur un mètre-ruban, selon l'invention ;
- figures 9a et 9b : deux schémas en perspective illustrant un exemple de dispositif de déploiement et de reploiement de deux structures déployables montées en opposition, chaque structure déployable comportant trois mètres-ruban élémentaires fixés sur une toile flexible, en configuration déployée, selon l'invention ;
- figures 10a à 10e : un exemple de cinématique de déploiement de la structure déployable de la figure 8a, selon l'invention ;
- figures 11a à 11g: un exemple de cinématique de déploiement des deux structures déployables de la figure 9a, selon l'invention ;
- figures 12a à 12c : des exemples de différentes configurations de structures déployables flexibles, tels que des ailes de générateurs solaires, montées sur la plateforme d'un satellite, selon l'invention ;
- figures 13a à 13d : des exemples de configurations d'une structure déployable flexible comportant deux couples de deux demi-ailes de générateurs solaires montées en opposition sur la plateforme d'un satellite, selon l'invention ;
- figures 14a à 14c : trois vues, en coupe longitudinale, d'une aile de générateur solaire respectivement, en position stockée, en position partiellement déployée et en position complètement déployée, selon l'invention ;
- figures 15a et 15b : deux vues en perspective d'une aile de générateur solaire, respectivement de deux ailes de générateur solaire montées en opposition sur un satellite, en position complètement déployée, selon l'invention ;
- figure 16 : une vue en coupe longitudinale, en configuration déployée, d'une aile de générateur solaire à concentration comportant deux membranes flexibles supportant des objets différents sur les deux faces externes de l'aile, selon l'invention.

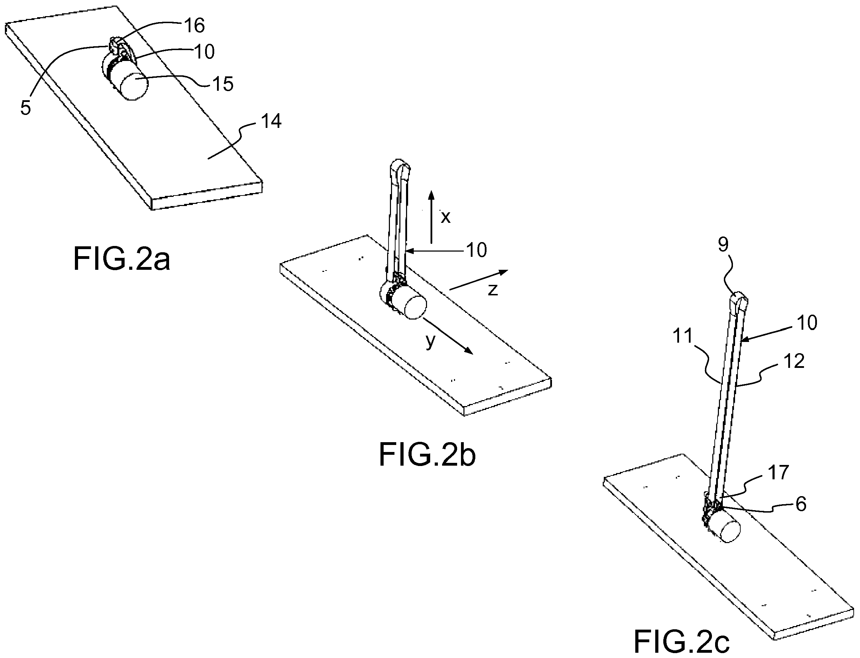

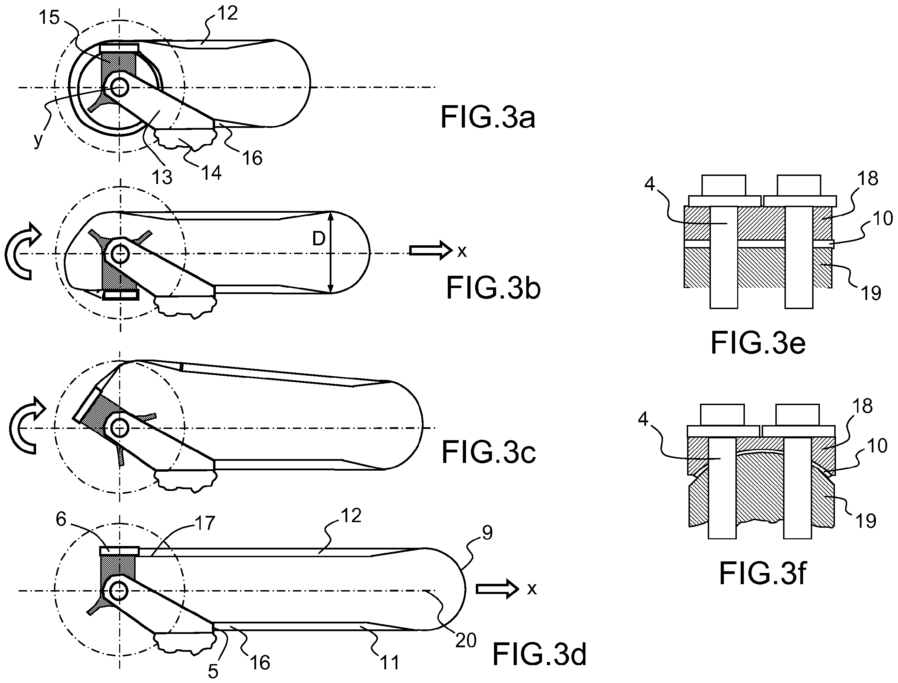

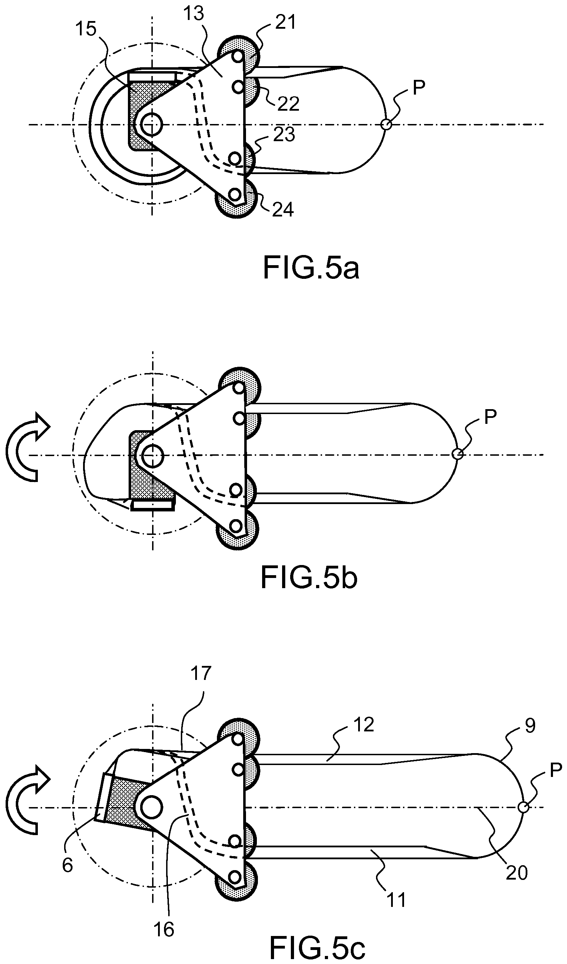

Selon un premier mode de réalisation de l'invention, le dispositif de déploiement et de reploiement représenté sur les figures 2a à 2c et sur les vues schématiques en coupe des figures 3a à 3d, comporte au moins un mètre-ruban 10 ayant un axe de déploiement et de reploiement parallèle à un axe X et un rotor 15. Comme représenté sur les figures 1a, 1b, 1c, le mètre-ruban 10 peut être une lame flexible qui comporte une première face 101 convexe, une deuxième face 102 concave et une section en arc de cercle ayant un rayon de courbure R transversal. Le mètre-ruban peut également être une lame flexible ondulée ou une tôle flexible ondulée comportant plusieurs rayons de courbure transversaux, les ondulations de la lame, ou de la tôle, pouvant former plusieurs zones convexes 103 séparées par des zones concaves 104. La figure 1d illustre une vue en perspective d'un exemple de lame flexible ondulée comportant une face ayant deux zones convexes séparées par une zone médiane concave, cependant, le nombre de zones convexes peut être supérieur à deux. Le mètre-ruban est apte à passer de l'état enroulé à l'état déroulé de façon autonome, essentiellement grâce à son énergie élastique. Selon l'invention, le mètre-ruban est monté plié en deux et comporte deux extrémités 16, 17 fixées rigidement respectivement à un premier ancrage 5 et à un second ancrage 6, le second ancrage 6 étant solidaire du rotor 15. Le premier ancrage peut être solidaire d'un stator 14 ou du rotor 15. Le mètre-ruban forme donc, pendant le déploiement et en position déployée, une structure flexible en forme de U comportant deux branches 11, 12 reliées par une base 9 en arc de cercle dont le rayon correspond sensiblement au rayon de courbure du mètre-ruban. L'extrémité 16 située à l'extrémité de la première branche 11 du mètre-ruban 10, peut être fixée directement sur un stator 14 ou par l'intermédiaire d'une ferrure fixe 13 comme représenté par exemple sur les figures 3a à 3d mais ce n'est pas obligatoire. Alternativement, dans un autre mode de réalisation de l'invention, comme représenté sur les figures 5a à 5c, l'extrémité 16 située à l'extrémité de la première branche 11 du mètre-ruban 10, peut être fixée sur le rotor 15. La ferrure 13 solidaire du stator 14 supporte un axe de rotation Y du rotor 15, l'axe Y étant perpendiculaire à l'axe X. Lorsque le premier ancrage 5 est fixé sur le stator 14, en position stockée représentée sur la figure 3a, le mètre-ruban 10 est enroulé autour du rotor 15 de l'extrémité 17 de la deuxième branche 12 jusqu'à l'extrémité 16 de la première branche 11. En position stockée, la première branche 11 est donc enroulée par-dessus la deuxième branche 12. En cours de déploiement représenté sur la figure 3b, le mètre-ruban 10 est déroulé progressivement et se déploie, de l'extrémité 16 de la première branche 11 jusqu'à l'extrémité 17 de la deuxième branche 12, dans une direction parallèle à l'axe X sous l'action de la rotation du rotor 15, l'extrémité 16 de la première branche 11 restant fixe, l'extrémité 17 de la deuxième branche 12 restant solidaire du rotor. En position déployée, comme représenté sur la figure 3d, les deux branches 11, 12 du mètre-ruban 10 sont espacées l'une de l'autre. A la base 9 du U, l'espacement entre les deux branches 11, 12 du mètre-ruban 10 correspond sensiblement au diamètre de courbure D du mètre-ruban 10. Les deux branches 11, 12 du mètre-ruban 10 peuvent être parallèles entre elles comme représenté sur les figures 3a, 3b, 3d, mais ce n'est pas obligatoire.

Le mètre-ruban étant monté plié en deux, il présente, en position déployée, une structure flexible continue s'étendant de part et d'autre d'un axe longitudinal médian 20 parallèle à l'axe X de déploiement et de reploiement, la même face, concave 102, ou convexe 101, ou ondulée, du mètre-ruban étant toujours orientée vers l'extérieur de la forme en U. Les deux branches 11 et 12 de la structure flexible déployée comportent donc des faces externes avant et arrière de raideurs identiques selon deux sens opposés d'une même direction Z orthogonale au plan de la structure flexible déployée qui est donc parfaitement stable. De préférence, dans le cas où le mètre-ruban est une lame flexible comportant deux faces respectivement convexe et concave, le mètre-ruban est plié en deux du côté de sa face concave 102, de façon que sa face convexe 101 soit orientée vers l'extérieur de la forme en U. Cependant, le mètre-ruban peut aussi être plié en deux du côté de sa face convexe 101, de façon que sa face concave 102 soit orientée vers l'extérieur de la forme en U.

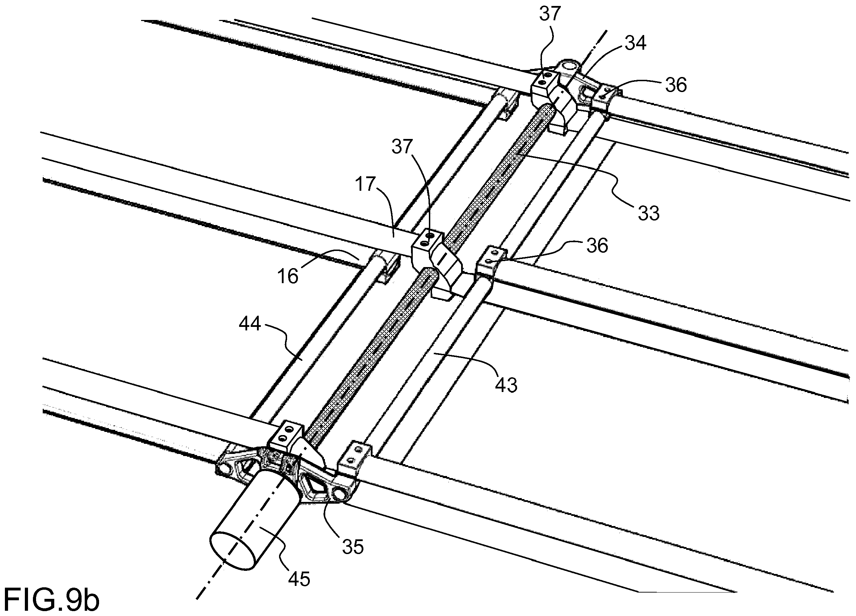

En position stockée, le mètre-ruban 10 est maintenu enroulé sur lui-même. Le déploiement du mètre-ruban est réalisé de façon autonome, grâce à l'énergie élastique du mètre-ruban. Pour que, pendant la phase de déploiement, le déroulement du mètre-ruban soit progressif, régulier et homogène, le dispositif de déploiement et de reploiement peut comporter en outre un dispositif de régulation 45 couplé au rotor 15, comme représenté par exemple sur la figure 9b. Le dispositif de régulation 45 permet, en position stockée, de maintenir le mètre-ruban en position enroulée et pendant le déploiement, de réguler la vitesse de déploiement du mètre-ruban 10. Le dispositif de régulation peut comporter, par exemple, un moteur électrique associé à un réducteur et peut comporter en outre un dispositif d'arrêt assurant la fixation du mètre-ruban en position stockée. De préférence, le dispositif de régulation 45 est irréversible en rotation lorsqu'il n'est pas alimenté, ce qui permet de maintenir le mètre-ruban enroulé en position stockée. L'alimentation du dispositif de régulation 45 permet alors de libérer le mètre-ruban qui peut se déployer de manière autonome, sa vitesse de déploiement étant contrôlée par le dispositif de régulation 45.

Différents types d'ancrages peuvent être aménagés sur le rotor 15 et sur le stator 14. Les ancrages représentés sur les figures 3e et 3f, comportent deux pièces complémentaires, appelées mâchoires 18, 19, ayant deux surfaces internes de formes complémentaires placées en vis-à-vis l'une de l'autre, les deux surfaces internes complémentaires des deux mâchoires 18, 19 constituant des surfaces d'ancrage du mètre-ruban 10. Le mètre-ruban 10 est donc encastré et pincé entre les deux mâchoires, au niveau de l'extrémité 16 de la première branche 11 du U et de l'extrémité 17 de la deuxième branche du U. Sur la figure 3e, les deux surfaces d'ancrage du mètre-ruban sont de formes planes ce qui permet de faciliter l'enroulement et le déroulement du mètre-ruban 10, mais offre un moins bon encastrement du mètre-ruban en position déployée. Sur la figure 3f, les deux surfaces d'ancrage du mètre-ruban sont de formes respectivement concave et convexe ce qui permet un bon encastrement du mètre-ruban en position déployée mais nécessite un rayon d'enroulement et de déroulement du mètre-ruban 10 plus important que lorsque les surfaces d'ancrage sont planes. Le choix du type d'ancrage dépend des performances de rigidité et de couple de motorisation du mètre-ruban que l'on souhaite atteindre.

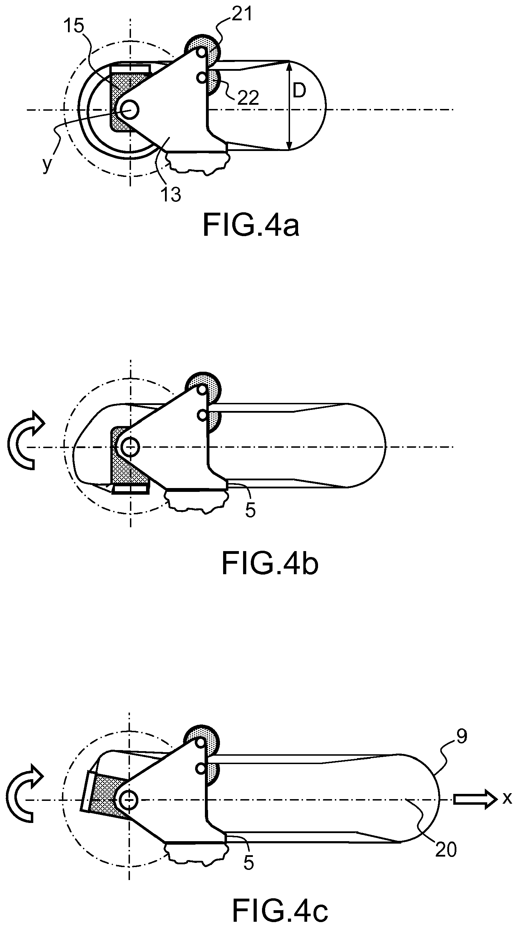

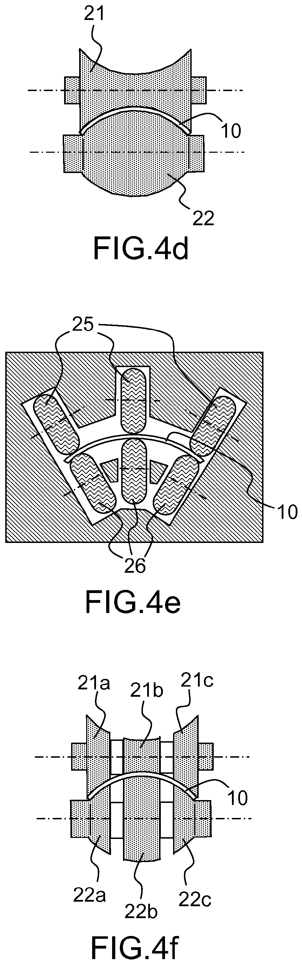

La première mâchoire 19, par exemple convexe, est solidaire du stator 14 lorsqu'elle est située au niveau du premier ancrage 5, ou est solidaire du rotor 15 lorsqu'elle est située au niveau du deuxième ancrage 6. La deuxième mâchoire 18, par exemple concave, est fixée sur la première mâchoire 19 par des brides 4. Les brides sont fixées sur une surface externe de la deuxième mâchoire 18, la surface externe pouvant être de forme plane comme représenté sur les figures 3e et 3f, ou avoir une autre forme, par exemple concave, comme représentée sur la figure 4d dont le galet 21 comporte une surface externe concave.

L'extrémité 16 de la première branche 11 fixée sur le stator 15 est généralement équipée d'un premier ancrage 5 comportant deux mâchoires complémentaires 18, 19, respectivement concave et convexe, tel que l'ancrage représenté sur la figure 3f, car il est nécessaire d'avoir un ancrage présentant une rigidité maximum au niveau de cette extrémité 16 et il n'y a pas de contrainte d'enroulement à cette extrémité 16.

Avantageusement, le dispositif de déploiement et de reploiement peut comporter des moyens de guidage du mètre-ruban 10 pour guider l'orientation du mètre-ruban 10 pendant le déploiement ou le reploiement. Sur les figures 4a à 4c, un moyen de guidage de la deuxième branche 12 du mètre-ruban est fixé sur la ferrure 13. Comme représenté sur les figures 4a à 4d, le moyen de guidage peut comporter par exemple deux galets 21, 22, les deux galets 21, 22 ayant deux surfaces complémentaires, respectivement concave et convexe, placées en vis-à-vis. Afin de réduire les frottements entre les galets et le mètre-ruban, chaque galet 21, 22 peut avoir une structure monobloc comme représenté sur la figure 4d ou être constitué de plusieurs parties différentes 21a, 21b, 21c, 22a, 22b, 22c, à symétrie de révolution, par exemple cylindrique ou convexe ou concave, autour d'un même axe comme représenté sur la figure 4f. Le mètre-ruban est alors encastré et pincé entre les deux galets 21, 22 au niveau de la deuxième branche 12 du U. Les deux galets permettent alors d'assurer un enroulement correct du mètre-ruban 10 sur le rotor 15 pendant une phase de reploiement et permettent de pouvoir reployer le mètre-ruban en vol lorsque la structure déployable est montée sur un satellite. Dans le cas particulier représenté sur les figures 4a à 4c, où le guidage du mètre-ruban 10 est obtenu par un système de galets, il est possible d'avoir des ancrages plan au niveau du rotor 15 tels que représentés sur les figures 3e et 3f.

Afin de réduire les frottements entre les galets et le mètre-ruban lors des phases de déploiement et de reploiement, il est possible de remplacer le galet convexe 22 et le galet concave 21 par deux ensembles 25, 26 de plusieurs galets disposés en vis-à-vis, en arcs de cercle, en formant respectivement une forme convexe et une forme concave complémentaires, les deux ensembles de galets pouvant comporter le même nombre de galets, par exemple trois galets tel que représenté sur la figure 4e, ou un nombre de galets différent. Le premier ensemble 25 de galets comporte plusieurs galets espacés radialement et disposés en un premier arc de cercle, le deuxième ensemble 26 de galets comporte plusieurs galets espacés radialement et disposés en un deuxième arc de cercle, les premier et deuxième arcs de cercle étant concentriques, les galets du deuxième ensemble 26 de galets étant positionnés respectivement en vis à vis des galets du premier ensemble 25 de galets. Le mètre-ruban 10 est alors encastré et pincé entre le premier et le deuxième ensemble 25, 26 de galets.

Dans une variante de réalisation de l'invention représentée sur les figures 5a à 5c, l'extrémité 16 de la première branche 11 et l'extrémité 17 de la deuxième branche 12 du mètre-ruban 10 sont fixées à l'ancrage 6 solidaire du rotor 15 et les moyens de guidage comportent deux premiers galets 21, 22 et deux seconds galets 23, 24 montés sur la ferrure 13. Les deux premiers galets 21, 22 et les deux seconds galets 23, 24 sont placés symétriquement sur la ferrure 13 par rapport à l'axe médian 20 du U et comportent deux surfaces complémentaires respectivement concave et convexe montées en vis-à-vis. Le mètre-ruban 10 est alors encastré et pincé entre les deux premiers galets 21, 22 au niveau de la deuxième branche 12 du U et entre les deux seconds galets 23, 24 au niveau de la première branche 11 du U. Dans ce cas, en position stockée, les deux branches 11, 12 du mètre-ruban 10 sont co-enroulées autour du rotor 15 et en cours de déploiement, les deux branches 11, 12 du mètre-ruban 10 sont déroulées simultanément. Les deux branches du mètre-ruban se déroulant et s'enroulant simultanément autour du rotor 15 et étant guidées respectivement par les deux premiers galets 21, 22 et les deux seconds galets 23, 24, la base du U et le point d'intersection P entre la base du U et l'axe médian du U restent alors toujours positionnés au même endroit du mètre-ruban 10.

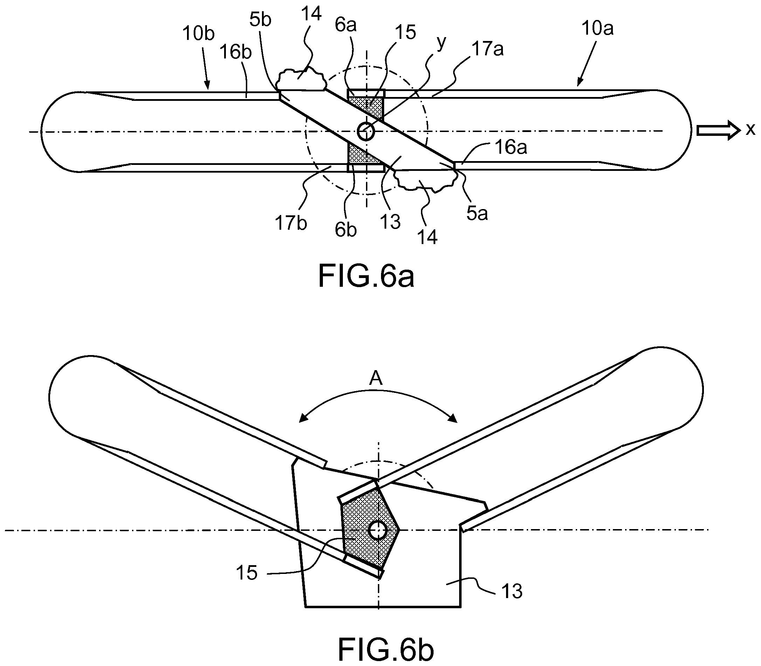

Le dispositif de déploiement et de reploiement peut comporter un seul mètre-ruban plié en deux ou plusieurs mètres-ruban, chaque mètre-ruban étant plié en deux et ayant une deuxième extrémité fixée sur le même rotor 15 et une première extrémité fixée soit sur le même stator soit sur le même rotor. Dans un deuxième mode de réalisation de l'invention, comme représenté par exemple sur les figures 6a et 6b, le dispositif de déploiement et de reploiement comporte deux mètres-ruban 10a, 10b ayant des axes de déploiement et de reploiement de sens opposés pouvant être par exemple parallèles à l'axe X ou former un angle A par rapport à l'axe X. les deux mètres-ruban 10a, 10b peuvent être fixés sur la même ferrure 13 solidaire du stator 14 et sur le même rotor 15, chaque mètre-ruban étant monté plié en deux de façon à former, pendant le déploiement et en position déployée, une structure en forme de U. Ainsi, le premier mètre-ruban 10a comporte une première extrémité 16a fixée au stator 14, par l'intermédiaire de la ferrure 13, par un premier ancrage 5a fixe et une deuxième extrémité 17a fixée sur le rotor 15 par un deuxième ancrage 6a. Le deuxième mètre-ruban 10b comporte une première extrémité 16b fixée au stator par un premier ancrage 5b fixe et une deuxième extrémité 17b fixée sur le rotor 15 par un deuxième ancrage 6b solidaire du rotor 15. En position stockée, les deux mètres-ruban 10a, 10b sont co-enroulés autour du rotor 15 et en cours de déploiement, les deux mètres-ruban 10a, 10b sont déployés simultanément en opposition l'un par rapport à l'autre de part et d'autre du rotor 15 selon deux directions pouvant être, par exemple, parallèles à l'axe X et former un angle de 180° entre elles comme représenté sur la figure 6a ou selon deux directions formant entre elles un angle A inférieur à 180°, comme représenté sur la figure 6b.

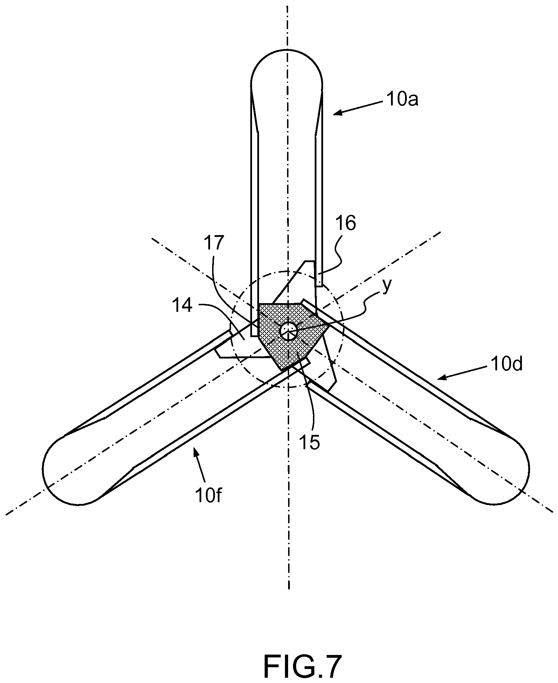

Dans un troisième mode de réalisation de l'invention, le dispositif de déploiement et de reploiement comporte plusieurs mètres-ruban ayant des axes de déploiement et de reploiement disposés en étoile. Par exemple, sur la figure 7, trois mètres-ruban 10c, 10d, 10f sont disposés en étoile et forment entre eux des angles de l'ordre de 120°. Les trois mètres-ruban 10c, 10d, 10f ont une première extrémité 16 fixée par exemple sur le même stator 14 ou alternativement sur le même rotor 15 et une seconde extrémité 17 fixée rigidement sur le même rotor 15, chaque mètre-ruban étant monté plié en deux de façon à former, pendant le déploiement et en position déployée, une forme de U. Dans ce cas, le stator 14 peut par exemple avoir la forme d'une étoile à trois branches sur lesquelles sont fixées respectivement, les premières extrémités 16 des trois mètres-ruban, et le rotor 15 peut par exemple avoir une forme polygonale comportant au moins trois faces sur lesquelles sont fixées respectivement, les deuxièmes extrémités 17 des trois mètres-rubans. Il est également possible de réaliser un dispositif de déploiement et de reploiement comportant plus de trois mètres-ruban disposés en étoile.

Lorsque les objets à déployer sont de petite dimension, tels que par exemple des circuits électroniques, des éléments électromagnétiques, des antennes ou des petites surfaces planes, le mètre-ruban 10 peut être utilisé comme support des objets à déployer, les objets étant directement fixés sur le mètre-ruban. Le déploiement du mètre-ruban assure alors le déploiement des objets fixés dessus. Lorsqu'il est nécessaire de déployer des surfaces planes de plus grandes dimensions, équipées, par exemple, d'éléments tels que des cellules solaires, il peut être nécessaire de fixer une membrane flexible 30, destinée à supporter les éléments à déployer, sur au moins deux mètres-ruban pour augmenter la rigidité de l'ensemble de la structure flexible lorsqu'elle est déployée.

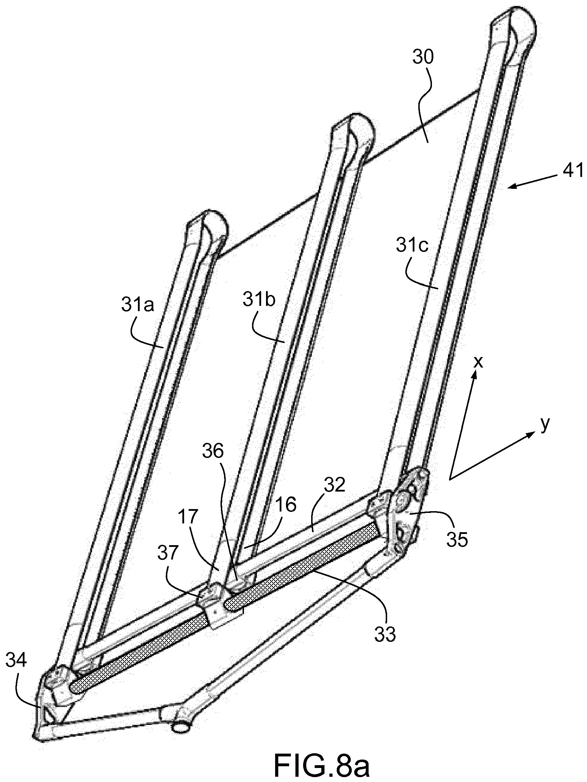

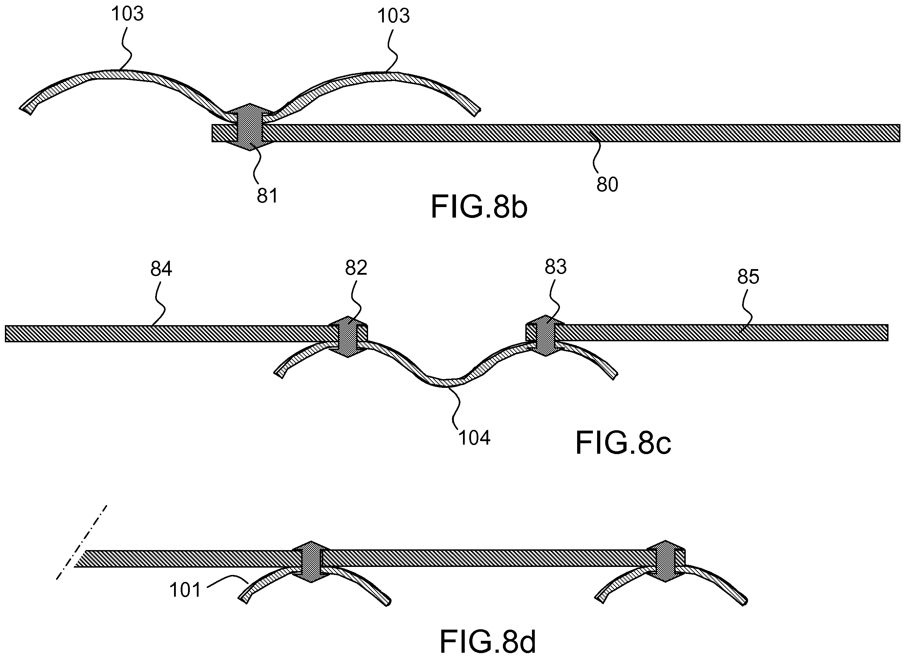

Un schéma d'un exemple de dispositif de déploiement et de reploiement d'une structure déployable flexible 41 comportant trois mètres-ruban élémentaires fixés sur une membrane flexible est représenté sur la figure 8a. Le dispositif de déploiement et de reploiement comporte une membrane flexible, ou une toile flexible, 30 à deux dimensions respectivement parallèles aux axes X et Y, trois mètres-ruban 31a, 31b, 31c, un stator 32, un rotor 33 et deux ferrures 34, 35. La membrane flexible 30 est destinée à supporter des éléments à déployer tels que par exemple des cellules solaires, des cellules métallisées pour la réflexion des ondes radio, ou des éléments isolants pour réaliser un écran thermique, ou tout autre dispositif. Chaque mètre-ruban 31a, 31b, 31c est monté plié en deux, les trois mètres-ruban étant fixés sur la membrane flexible 30 parallèlement entre eux et parallèlement à l'axe X de déploiement et de reploiement longitudinal. Par exemple, deux mètres-ruban peuvent être montés sur les bords latéraux de la membrane flexible et le troisième mètre-ruban peut être monté au niveau d'une ligne médiane de la membrane flexible. La membrane flexible 30 peut être renforcée par des lattes latérales 80, 84, 85 orthogonales à l'axe X et fixées respectivement sur chaque mètre-ruban 31a, 31b, 31c. Les figures 8b et 8c représentent deux exemples, en coupe transversale, de lattes latérales fixées sur un mètre-ruban comportant plusieurs rayons de courbure transversaux. Les lattes latérales 80, 84, 85 peuvent être fixées en un point de fixation 81, 82, 83 situé par exemple sur le sommet d'une ondulation 103, 104 du mètre-ruban. Lorsque le mètre-ruban comporte plusieurs ondulations, le point de fixation 81, 82, 83 peut être situé au sommet de l'ondulation médiane 104 comme représenté sur la figure 8b, ou au sommet d'une ondulation latérale 103, comme représenté sur la figure 8c. Dans le cas de la figure 8c, les deux ondulations latérales 103 du mètre-ruban permettent de disposer de deux points de fixation 82, 83 possibles et de fixer deux lattes latérales 84, 85 différentes sur le même mètre-ruban. Bien qu'un mètre-ruban comportant plusieurs rayons de courbure transversaux est avantageux pour fixer les lattes latérales, il est bien entendu également possible de fixer les lattes latérales sur un mètre-ruban à un seul rayon de courbure transversal comme représenté par exemple sur la figure 8d dans laquelle une latte latérale est fixée sur le sommet de la face convexe 101 de deux mètres-ruban à un seul rayon de courbure transversal, disposés parallèlement entre eux. En position déployé, chaque mètre-ruban étant plié en forme de U, selon l'application souhaitée, il est possible de fixer le mètre-ruban sur toute sa longueur sur une même membrane flexible, chaque branche du U étant fixée sur la membrane flexible avant de replier le mètre-ruban, ou de fixer les deux branches du U sur deux membranes flexibles différentes, ou dans le cas d'une application à un générateur solaire par exemple, de fixer une seule branche du mètre-ruban sur la membrane flexible.

De préférence, chaque mètre-ruban est fixé sur la membrane flexible par sa face convexe ou sur le sommet d'une ondulation lorsque chaque mètre-ruban comporte plusieurs ondulations. La fixation du mètre-ruban sur la membrane flexible peut être réalisée par tout moyen de fixation tel que, par exemple, par collage, ou par couture, ou par rivetage, ou par agrafage. Le rotor 33 a un axe de rotation Y perpendiculaire à l'axe X et comporte deux extrémités opposées respectivement montées sur les deux ferrures 34, 35. Comme représenté dans le mode de réalisation de la figure 8a, le rotor 33 et le stator 32 peuvent par exemple être de formes cylindriques et le stator 32 peut avoir un axe longitudinal parallèle à l'axe longitudinal Y du rotor 33 et comporter deux extrémités opposées respectivement fixées sur les deux ferrures 34, 35 par l'intermédiaire d'ancrages fixes. Chaque mètre-ruban comporte deux extrémités 16, 17 fixées rigidement, respectivement sur le stator 32 et sur le rotor 33, par l'intermédiaire d'ancrages 36, 37. Sur l'exemple de la figure 8a, le rotor 33 et le stator 32 sont décalés l'un par rapport à l'autre dans une direction parallèle à l'axe de déploiement X d'une distance légèrement supérieure au diamètre de courbure de chaque mètre-ruban de façon à permettre le déroulement et l'enroulement des mètres-ruban autour du rotor 33 lors du déploiement et du reploiement.

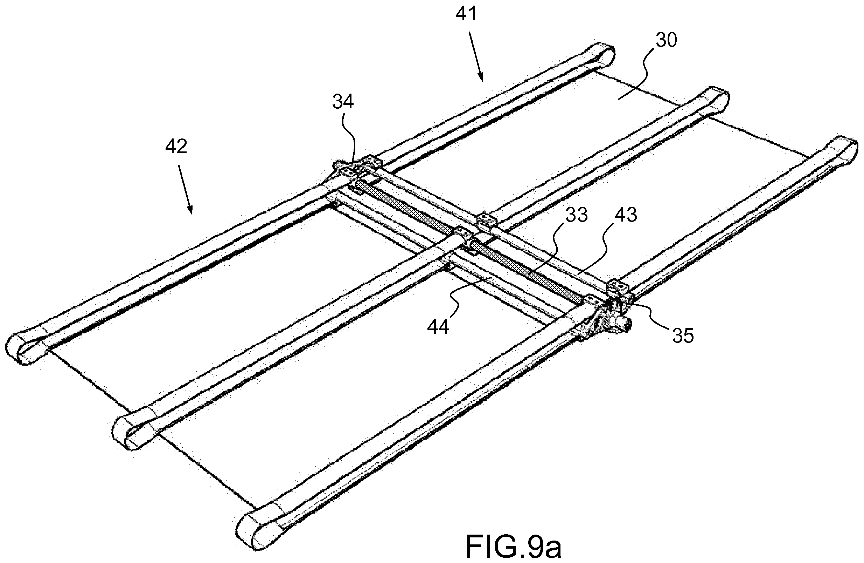

Le dispositif de déploiement et de reploiement peut comporter une seule structure déployable 41 comme décrit en liaison avec la figure 8a, mais il est également possible de monter deux structures déployables en opposition sur le même rotor et de déployer ou de reployer les deux structures simultanément. Sur les figures 9a et 9b, le dispositif de déploiement et de reploiement comporte deux structures déployables 41, 42 comportant chacune trois mètres-ruban élémentaires fixés sur une membrane flexible comme décrit en liaison avec la figure 8a, un rotor 33 unique commun aux deux structures déployables et deux stators identiques 43, 44 montés de part et d'autre du rotor 33. La structure déployable représentée sur la figure 9b montre en outre un dispositif de régulation 45 de la vitesse de déploiement montée à une extrémité du rotor 33. En position stockée, les deux structures déployables sont co-enroulées autour du rotor 33 et le dispositif de régulation 45 n'est pas alimenté, ce qui permet de maintenir les deux structures déployables co-enroulées autour du rotor 33. Sur les figures 9a et 9b les axes de déploiement des deux structures déployables forment un angle de 180° entre eux, mais il est bien entendu possible de positionner les axes de déploiement des deux structures déployables selon deux directions formant entre elles un angle A inférieur à 180°, comme décrit en liaison avec la figure 6b.

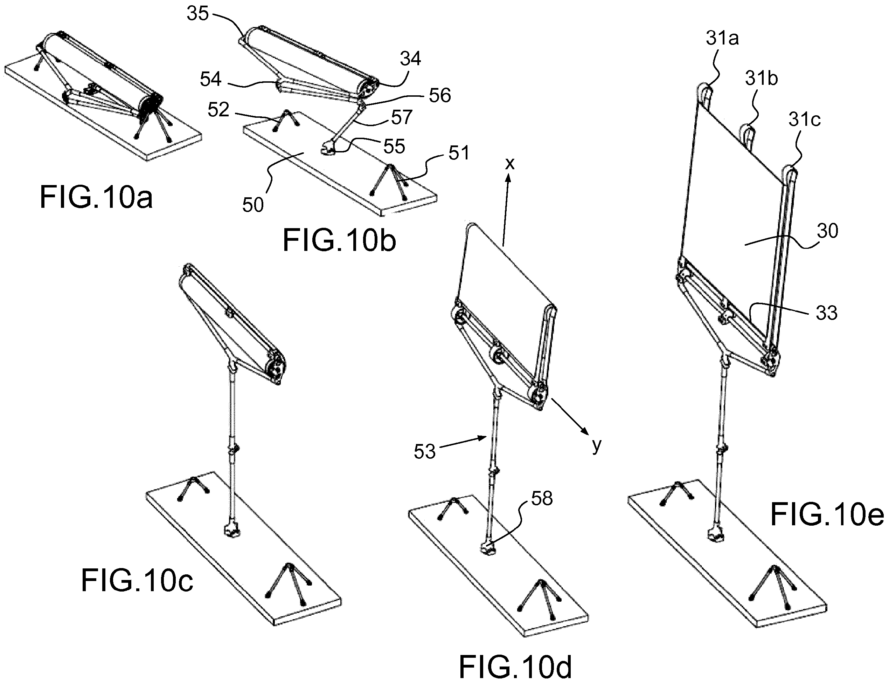

Les figures 10a à 10e illustrent un exemple de cinématique de déploiement d'une structure flexible conforme aux modes de réalisation des figures 3a à 3d et 8a, tel qu'un générateur solaire par exemple. Dans cet exemple, la structure flexible comporte une membrane ou une toile flexible 30 à deux dimensions parallèles aux axes X, Y et trois mètres-ruban 31a, 31b, 31c fixés sur la membrane flexible 30. Comme représenté sur l'exemple de réalisation, bien que ce ne soit pas indispensable, pour éloigner la structure flexible d'un support 50, telle que la plateforme d'un satellite par exemple, la structure flexible peut être montée au bout d'un mât 53 par l'intermédiaire d'une première articulation 54, la base du mât étant montée sur le support par l'intermédiaire d'une deuxième articulation 55. Pour augmenter la longueur du mât, le mât peut être constitué de plusieurs bras 57 montés bout à bout et articulés entre eux par des articulations intermédiaires 56. Pour orienter la structure flexible, un moteur 58 d'entrainement en rotation du mât autour de l'axe X de déploiement de la structure flexible peut être positionné à l'emplanture du mât 53, sous la deuxième articulation 55. En position stockée représentée sur la figure 10a, le mât 53 est replié sur le support 50 et la structure flexible est enroulée autour du rotor, les deux ferrures 34, 35 étant fixées sur le support 50 par des fixations 51, 52. A partir de la position stockée, comme représenté sur les figures 10b et 10c, le déploiement du mât est réalisé de manière autonome, par libération des fixations 51, 52. Lorsque le mât est déployé, comme représenté sur les figures 10d et 10e, l'alimentation du dispositif de régulation 45 autorise le déploiement de la membrane flexible enroulée sur le rotor 33 qui s'effectue de manière autonome, la vitesse de déroulement de la membrane autour de l'axe Y étant contrôlée par le dispositif de régulation 45 fixé au rotor.

Il est également envisageable de déployer la structure flexible avant de déployer le mât 53 alors que celui-ci est encore fixé sur le support 50 par l'intermédiaire des fixations 51 et 52.

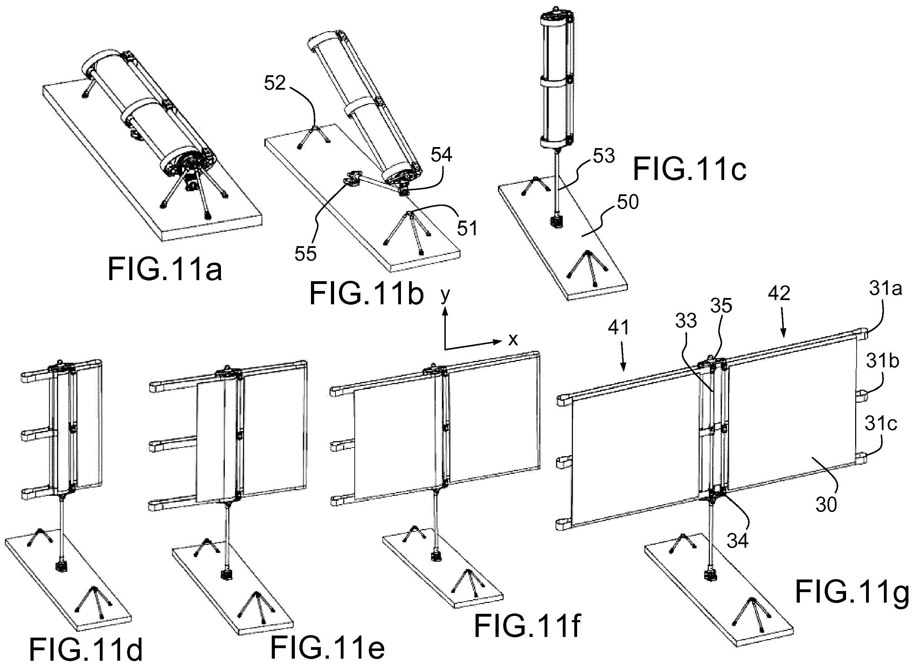

Les figures 11a à 11g illustrent un exemple de cinématique de déploiement de deux structures déployables 41, 42 montées en opposition sur le même rotor 33, tel que deux générateurs solaires par exemple, conformément aux modes de réalisation des figures 6, 9a, 9b. Dans cet exemple, chaque structure déployable comporte une membrane flexible 30 à deux dimensions parallèles aux axes X, Y et trois mètres-ruban 31a, 31b, 31c fixés sur la membrane flexible. Comme représenté sur l'exemple de réalisation, bien que ce ne soit pas indispensable, pour éloigner les deux structures flexibles du support 50, tel que la caisse d'un satellite par exemple, les deux structures flexibles sont montées au bout d'un mât 53 par l'intermédiaire d'une première articulation 54, la base du mât étant montée sur le support par l'intermédiaire d'une deuxième articulation 55. En position stockée représentée sur la figure 11a, le mât est replié sur le support 50 et les deux structures flexibles sont co-enroulées autour du rotor 33, les deux ferrures 34, 35 étant fixées sur le support 50 par des fixations 51, 52. A partir de la position stockée, comme représenté sur les figures 11b et 11c, le déploiement du mât est réalisé de manière autonome, par libération des fixations 51, 52. Lorsque le mât est déployé, comme représenté sur les figures 11d à 11g, le déploiement des deux structures flexibles est réalisé simultanément de part et d'autre du rotor 33, de manière autonome. L'alimentation du dispositif de régulation 45 autorise le déploiement de la membrane flexible enroulée sur le rotor 33, la vitesse de déroulement de la membrane autour de l'axe Y étant contrôlée par le dispositif de régulation 45 fixé au rotor.

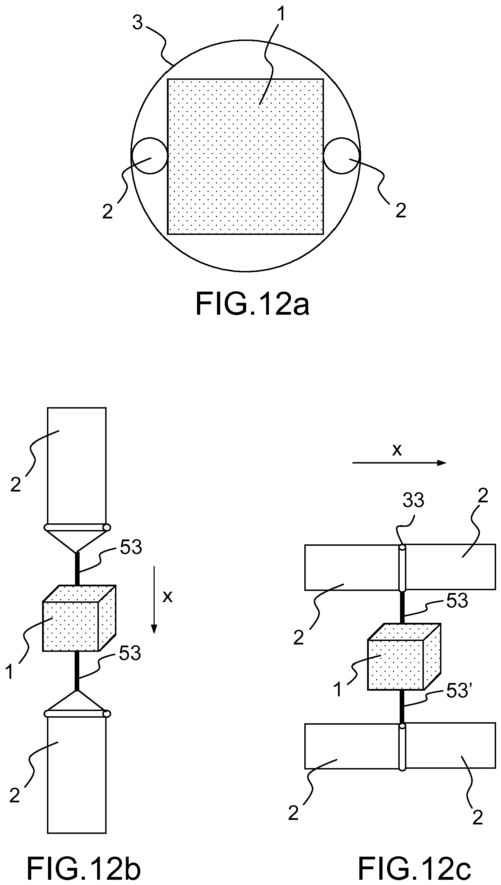

Les figures 12a à 12c illustrent des exemples de différentes configurations de structures déployables flexibles, tels que des ailes de générateurs solaires, montées sur la plateforme d'un satellite 1, selon l'invention. Sur la figure 12a, l'ensemble constitué par le satellite 1 et les ailes 2 de générateurs solaires est monté dans la coiffe 3 d'un lanceur, les ailes 2 de générateurs solaires étant en position stockée. La figure 12b montre une configuration dans laquelle deux ailes 2 de générateurs solaires sont déployées symétriquement de part et d'autre du satellite 1 par l'intermédiaire d'un mât 53, l'axe de déploiement X des ailes de générateurs solaires étant parallèle au mât. La figure 12c illustre des couples de deux ailes 2 de générateurs solaires fixés sur deux structures déployables montées en opposition sur un même rotor 33, les deux couples étant déployés symétriquement de part et d'autre du satellite 1 par l'intermédiaire d'un mât respectif 53, 53'.

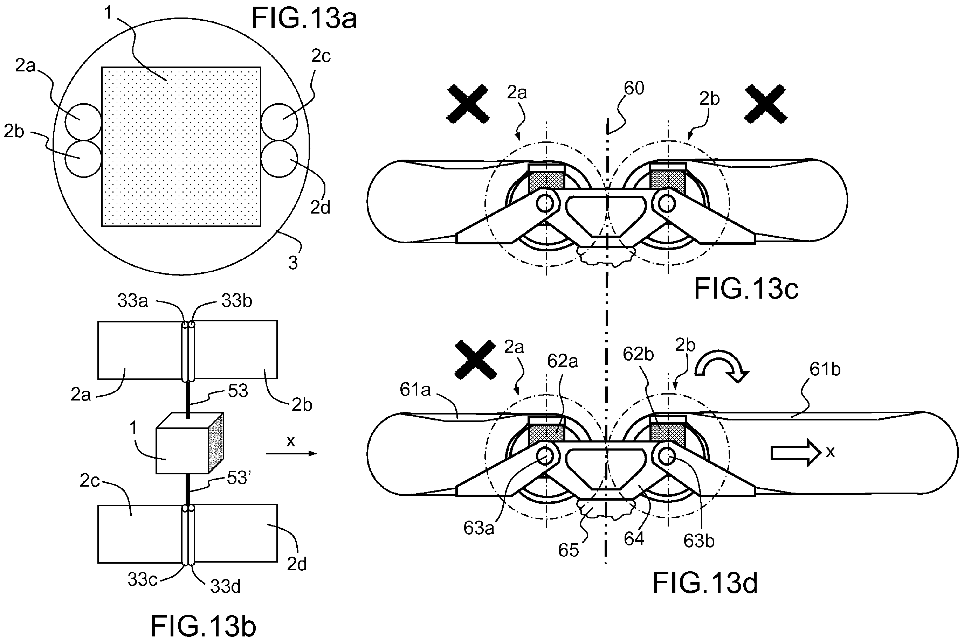

Les figures 13a et 13b illustrent des exemples de configuration d'une structure déployable flexible comportant deux couples de deux demi-ailes 2a, 2b, 2c, 2d de générateurs solaires montées de part et d'autre du satellite 1, par l'intermédiaire d'un mât respectif 53, 53', l'axe de déploiement X des demi-ailes de générateurs solaires étant perpendiculaire au mât. Les demi-ailes 2a, 2b, 2c, 2d de chaque couple sont montées dos à dos sur deux rotors respectifs différents 33a, 33b, 33c, 33d. Chaque demi-aile est donc une structure déployable flexible indépendante ayant un dispositif de déploiement et de reploiement dédié tel que représenté sur les différentes figures 3a à 3d, 4a à 4f, 5a à 5c, ou sur la figure 8a. Sur la figure 13a, l'ensemble constitué par le satellite 1 et les deux demi-ailes 2a, 2b, 2c, 2d de générateurs solaires est monté dans la coiffe 3 d'un lanceur, les deux demi-ailes étant en position stockée. Sur la figure 13b, les couples de deux demi-ailes 2a, 2b, 2c, 2d de générateurs solaires sont en position déployée. Le déploiement des deux demi-ailes d'un même couple est réalisé parallèlement à l'axe X mais selon deux sens opposés.

Les figures 13c et 13d illustrent deux vues en coupe longitudinale selon l'axe X de déploiement, d'un exemple de déploiement et de reploiement d'une structure déployable comportant deux demi-ailes 2a, 2b de générateur solaire montées dos à dos de part et d'autre d'un plan médian 60 de la structure déployable, le plan médian 60 étant perpendiculaire à l'axe X de déploiement et de reploiement. La figure 13c, montre les deux demi-ailes 2a, 2b en position stockée. Sur la figure 13d, l'une des deux demi-ailes 2b est en cours de déploiement, l'autre demi-aile 2a reste en position stockée. Les deux demi-ailes 2a, 2b comportent chacune au moins un mètre-ruban monté plié en deux comme décrit en liaison avec la figure 6, mais les deux mètres-ruban respectifs 61a, 61b des deux demi-ailes sont respectivement enroulés autour de deux rotors 62a, 62b différents disposés symétriquement de part et d'autre du plan médian 60. Les deux rotors 62a, 62b ont des axes de rotation respectifs 63a, 63b parallèles entre eux et supportés par une même ferrure 64 reliée à un stator 65 fixe. Chaque demi-aile étant montée sur un rotor dédié, chaque demi-aile a un dispositif de déploiement et de reploiement qui lui est dédié. Le déploiement de chaque demi-aile d'un même couple peut être contrôlé par deux dispositifs de régulation différents associés à chaque rotor, et le déploiement de chaque demi-aile est alors indépendant du déploiement des autres demi-ailes, ce qui permet le pilotage du satellite par les vents solaires.

Le déploiement de la structure déployable peut être complet ou partiel. Dans le cas des modes de réalisation des figures 13a à 13d, où la structure déployable flexible comporte deux couples de deux demi-ailes 2a, 2b, 2c, 2d de générateur solaire montées de part et d'autre du satellite 1, le déploiement des demi-ailes peut être contrôlé indépendamment du déploiement des autres demi-ailes et il est possible de modifier la géométrie des ailes des générateurs solaires en repliant partiellement ou totalement une, ou plusieurs, demi-aile en vol. Cela permet alors de piloter ou de compenser des déviations de la trajectoire du satellite grâce à la force des vents solaires sur les ailes à géométrie modifiée.

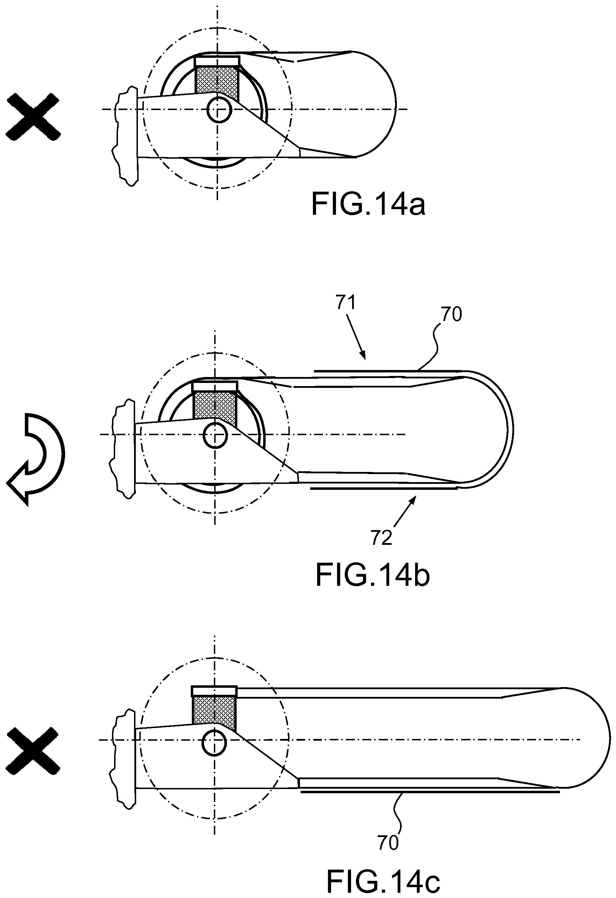

Dans le cas d'une aile de générateur solaire, en position déployée, les cellules solaires sont toutes localisées sur une seule et même face de l'aile alors qu'au cours du déploiement, il est possible d'obtenir des cellules solaires localisées sur les deux faces de l'aile comme représenté par exemple sur la figure 14b. Sur la figure 14a, l'aile de générateur solaire est en position stockée. Sur la figure 14b, l'aile de générateur solaire est en position partiellement déployée et les cellules solaires 70 sont réparties sur les deux faces externes 71, 72, respectivement arrière et avant, de l'aile du générateur solaire. Dans cette configuration, les deux faces externes 71, 72 de l'aile du générateur solaire sont actives. Le déploiement partiel d'une aile de générateur solaire est particulièrement avantageux pendant une phase de transfert du satellite d'une zone de l'espace où le satellite est éjecté de la coiffe d'un lanceur vers une orbite définitive autour de la Terre, car pendant cette phase de transfert, l'orientation de l'aile du générateur solaire par rapport au Soleil n'est pas optimisée et peut changer. Par ailleurs, le déploiement partiel de la structure déployable peut être réalisé avant le déploiement du mât, ce qui permet au satellite de reprendre des charges mécaniques plus importantes que lorsque le mât est déployé.

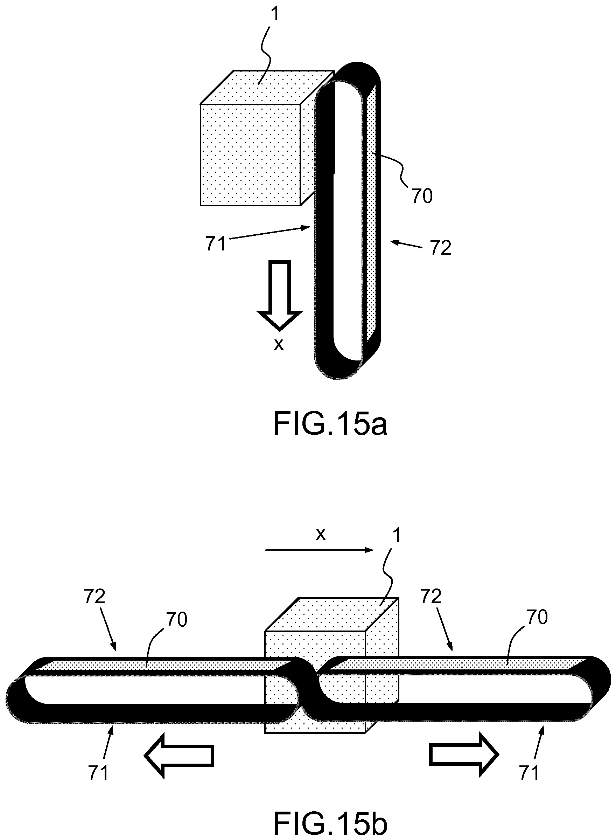

Sur les figures 14c et 15a, l'aile de générateur solaire est complètement déployée et les cellules solaires 70 sont toutes localisées sur la face externe avant 72 du générateur solaire. Sur la figure 15b, une structure déployable comportant deux ailes de générateur solaire est montée sur un satellite 1. Les deux ailes de générateur solaire sont complètement déployées et les cellules solaires 70 sont toutes localisées sur les faces externes avant 72 de chaque aile du générateur solaire.

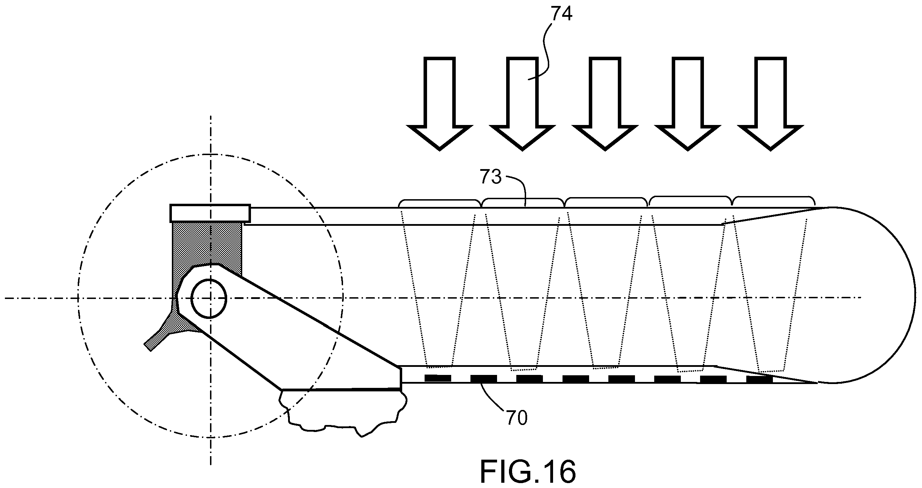

Dans un autre type d'application, comme représenté par exemple sur la figure 16, il est également possible de fixer des objets différents sur les deux faces externes arrière 71 et avant 72 d'une même aile. Dans ce cas, une première membrane flexible équipée de premiers objets est fixée sur la première branche du mètre-ruban plié en U et une deuxième membrane flexible équipée de seconds objets différents des premiers objets est fixée sur la deuxième branche du mètre-ruban. Par exemple, dans le cas d'un générateur solaire à concentration, la première membrane flexible peut être équipée de cellules solaires 70 et la deuxième membrane flexible peut être transparente et équipée d'éléments optiques 73 aptes à focaliser la lumière tels que des lentilles de concentration par exemple, les éléments optiques aptes à focaliser la lumière étant disposés en vis-à-vis des cellules solaires. Les lentilles de concentration 73 situées sur une face de l'aile orientée vers le Soleil permettent alors de concentrer les rayons du Soleil 74 sur les cellules solaires 70.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention définie selon les revendications.

## Revendications

1. Dispositif de déploiement et de reploiement d'une structure flexible comportant au moins un mètre-ruban (10) ayant un axe de déploiement et de reploiement parallèle à un axe X et un rotor (15, 33) mobile en rotation autour d'un axe Y perpendiculaire à l'axe X, le mètre-ruban (10) étant apte à passer, de façon autonome, d'un état enroulé autour du rotor (15, 33) à un état déroulé, le mètre-ruban (10) étant monté plié en deux en forme de U à deux branches (11, 12), le mètre-ruban comportant une première extrémité (16) d'une première branche (11) fixée rigidement à un premier ancrage (5, 36) et une deuxième extrémité (17) d'une deuxième branche (12) fixée rigidement à un deuxième ancrage (6, 37) solidaire du rotor (15, 33), la première extrémité (16) de la première branche (11) du mètre-ruban (10) étant montée entre deux mâchoires (18, 19) du premier ancrage (5, 36) et le dispositif de déploiement comportant en outre au moins un équipement spatial à déployer fixé sur le au moins un mètre-ruban.

2. Dispositif de déploiement et de reploiement selon la revendication 1, **caractérisé en ce que** le deuxième ancrage (6, 37) est constitué de deux mâchoires de formes complémentaires (18, 19) montées en vis-à-vis, la deuxième extrémité (17) de la deuxième branche (12) du mètre-ruban (10) étant montée entre les deux mâchoires du deuxième ancrage (6, 37).

3. Dispositif de déploiement et de reploiement selon l'une des revendications 1 ou 2, **caractérisé en ce qu'**il comporte en outre au moins deux galets (21, 22) montés en vis-à-vis sur une ferrure fixe (13) supportant l'axe de rotation du rotor (15, 33), la deuxième branche (12) du mètre-ruban solidaire du rotor (15, 33) étant encastrée entre les deux galets (21, 22).

4. Dispositif de déploiement et de reploiement selon l'une des revendications précédentes, **caractérisé en ce qu'**il comporte en outre un dispositif de régulation (45) d'une vitesse de déploiement couplé au rotor (15, 33).

5. Dispositif de déploiement et de reploiement selon l'une des revendications précédentes, **caractérisé en ce qu'**il comporte en outre au moins une membrane flexible (30) à deux dimensions XY, le mètre-ruban (10) étant fixé sur la membrane flexible (30), parallèlement à l'axe de déploiement et de reploiement X du mètre-ruban (10).

6. Dispositif de déploiement et de reploiement selon la revendication 5, **caractérisé en ce qu'**il comporte au moins deux mètres-ruban fixés parallèlement entre eux et parallèlement à l'axe X sur la membrane flexible (30), chaque mètre-ruban (31a, 31b, 31c) étant monté plié en deux, la première extrémité (16) de chaque mètre-ruban étant fixée rigidement au premier ancrage (5, 36) et la deuxième extrémité (17) de chaque mètre-ruban étant fixée rigidement au deuxième ancrage (6, 37) solidaire du rotor (15, 33).

7. Dispositif de déploiement et de reploiement selon la revendication 6, **caractérisée en ce que** la membrane flexible comporte des lattes latérales (80, 84, 85) orthogonales à l'axe X, les lattes latérales étant respectivement fixées sur chaque mètre-ruban (31a, 31b, 31c).

8. Dispositif de déploiement et de reploiement selon l'une des revendications précédentes, **caractérisé en ce qu'**il comporte en outre au moins un stator fixe (14, 32) et **en ce que** le premier ancrage (5, 36) est solidaire du stator (14, 32).

9. Dispositif de déploiement et de reploiement selon l'une des revendications 1 à 7, **caractérisé en ce que** le premier ancrage (5, 36) est solidaire du rotor (15, 33) et **en ce que** le dispositif de déploiement et de reploiement comporte deux premiers galets (21, 22) montés en vis-à-vis sur une ferrure fixe (13) supportant l'axe de rotation du rotor (15, 33) et deux seconds galets (23, 24) montés en vis-à-vis sur la ferrure (13), la deuxième branche (12) du mètre-ruban (10, 31a, 31b, 31c) étant encastrée entre les deux premiers galets (21, 22), la première branche (11) du mètre-ruban (10, 31a, 31b, 31c) étant encastrée entre les deux seconds galets (23, 24).

10. Dispositif de déploiement et de reploiement selon la revendication 8, **caractérisé en ce qu'**il comporte au moins deux mètres-rubans (10a, 10b) montés en opposition sur un même rotor (15, 33), chaque mètre-ruban (10a, 10b) étant monté plié en deux et comportant deux extrémités (16a, 17a), (16b, 17b) fixées respectivement sur le même stator (14, 32) par des premiers ancrages (5, 36) et sur le rotor (15, 33) par des deuxièmes ancrages (6, 37).

11. Dispositif de déploiement et de reploiement selon la 8, **caractérisé en ce qu'**il comporte au moins trois mètres-rubans (10c, 10d, 10f) montés en étoile sur un même rotor (15, 33), chaque mètre-ruban (10c, 10d, 10f) étant monté plié en deux et comportant deux extrémités fixées respectivement sur le même stator (14, 32) par des premiers ancrages (5, 36) et sur le rotor (15, 33) par des deuxièmes ancrages (6, 37).

12. Dispositif de déploiement et de reploiement selon la revendication 8, **caractérisé en ce qu'**il comporte au moins deux stators (43, 44) parallèles à l'axe Y, les deux stators étant montés de part et d'autre du rotor (33) et deux structures flexibles (41, 42) montées en opposition sur le rotor (33), chaque structure flexible (41, 42) comportant une membrane flexible (30) à deux dimensions XY et au moins un mètre-ruban (10, 31a, 31b, 31c) fixé plié en deux sur la membrane flexible (30), le mètre-ruban (10, 31a, 31b, 31c) comportant une première extrémité fixée rigidement sur l'un des deux stators (43, 44) et une deuxième extrémité fixée sur le rotor (33).

13. Dispositif de déploiement et de reploiement selon l'une des revendications précédentes, **caractérisé en ce que** le mètre-ruban (10, 31a, 31b, 31c) est une tôle ondulée.

14. Structure déployable flexible comportant au moins un dispositif de déploiement et de reploiement selon l'une des revendications précédentes.

15. Structure déployable flexible selon la revendication 14, **caractérisée en ce qu'**elle comporte en outre un mât (53) articulé déployable.

16. Structure déployable flexible selon la revendication 15, **caractérisée en ce que** le mât articulé (53) est apte à être fixé sur une plateforme d'un satellite (1) par l'intermédiaire d'un moteur (58) d'entraînement en rotation.

17. Structure déployable flexible selon l'une des revendications 14 à 16, **caractérisée en ce qu'**elle comporte deux demi-ailes (2a, 2b) de générateur solaire montées dos à dos de part et d'autre d'un plan médian (60) de la structure déployable, le plan médian (60) étant perpendiculaire à l'axe X de déploiement et de reploiement des deux demi-ailes (2a, 2b), et deux dispositifs de déploiement et de reploiement indépendants respectivement dédiés aux deux demi-ailes, les deux dispositifs de déploiement et de reploiement comportant deux rotors respectifs (62a, 62b), les deux rotors (62a, 62b) ayant des axes de rotation respectifs (63a, 63b) parallèles entre eux.

18. Structure déployable flexible selon l'une des revendications 14 à 16, **caractérisée en ce qu'**elle comporte une première membrane flexible fixée sur la première branche (11) du mètre-ruban (10, 31a, 31b, 31c) plié en deux et une deuxième membrane flexible fixée sur la deuxième branche (12) du même mètre-ruban (10, 31a, 31b, 31c), la première membrane flexible supportant des premiers objets (70) et la deuxième membrane flexible supportant des seconds objets (73) différents des premiers objets (70).

19. Structure déployable flexible selon la revendication 18, **caractérisée en ce que** les premiers objets (70) sont des cellules solaires et les seconds objets (73) sont des lentilles de concentration de la lumière et **en ce que** la deuxième membrane flexible est transparente aux rayons lumineux.

20. Satellite **caractérisé en ce qu'**il comporte au moins une structure déployable flexible selon l'une des revendications 14 à 19.

## Patentansprüche

1. Vorrichtung zum Entfalten und Zusammenfalten einer flexiblen Struktur, beinhaltend mindestens ein Maßband (10), welches eine Entfaltungs- und Zusammenfaltungsachse besitzt, welche parallel zu einer Achse X ist und einen Rotor (15, 33), welcher in Rotation beweglich um eine Achse Y ist, welche senkrecht zur Achse X ist, wobei das Maßband (10) geeignet ist, autonom von einem um den Rotor (15, 33) eingerollten Zustand zu einem ausgerollten Zustand überzugehen, wobei das Maßband (10) in zwei Teile gefaltet in Form eines U mit zwei Schenkeln (11, 12) montiert ist, wobei das Maßband ein erstes Ende (16) eines ersten Schenkels (11) beinhaltet, welches starr an einer ersten Verankerung (5, 36) befestigt ist und ein zweites Ende (17) eines zweiten Schenkels (12), welches starr an einer zweiten Verankerung (6, 37) befestigt ist, welche fest mit dem Rotor (15, 33) verbunden ist, wobei das erste Ende (16) des ersten Schenkels (11) des Maßbandes (10) zwischen zwei Backen (18, 19) der ersten Verankerung (5, 36) montiert ist und die Vorrichtung zum Entfalten zudem mindestens eine zu entfaltende Raumausrüstung beinhaltet, welche an dem mindestens einen Maßband befestigt ist.

2. Vorrichtung zum Entfalten und Zusammenfalten nach Anspruch 1, **dadurch gekennzeichnet, dass** die zweite Verankerung (6, 37) aus zwei Backen komplementärer Formen (18, 19) gebildet ist, welche einander gegenüber montiert sind, wobei das zweite Ende (17) des zweiten Schenkels (12) des Maßbandes (10) zwischen den beiden Backen der zweiten Verankerung (6, 37) montiert ist.

3. Vorrichtung zum Entfalten und Zusammenfalten nach einem der Ansprüche 1 oder 2, **dadurch gekennzeichnet, dass** sie zudem mindestens zwei Rollen (21, 22) beinhaltet, welche einander gegenüber an einem festen Beschlag (13) montiert sind, welcher die Drehachse des Rotors (15, 33) stützt, wobei der zweite Schenkel (12) des mit dem Rotor (15, 33) fest verbundenen Maßbandes zwischen den beiden Rollen (21, 22) eingelassen ist.

4. Vorrichtung zum Entfalten und Zusammenfalten nach einem der vorhergehenden Ansprüche, **dadurch gekennzeichnet, dass** sie zudem eine Regulierungsvorrichtung (45) einer Entfaltungsgeschwindigkeit beinhaltet, welche mit dem Rotor (15, 33) gekoppelt ist.

5. Vorrichtung zum Entfalten und Zusammenfalten nach einem der vorhergehenden Ansprüche, **dadurch gekennzeichnet, dass** sie zudem mindestens eine flexible Membran (30) mit zwei Dimensionen XY beinhaltet, wobei das Maßband (10) an der flexiblen Membran (30) parallel zur Entfaltungs- und Zusammenfaltungsachse X des Maßbandes (10) befestigt ist.

6. Vorrichtung zum Entfalten und Zusammenfalten nach Anspruch 5, **dadurch gekennzeichnet, dass** sie mindestens zwei Maßbänder beinhaltet, welche parallel zueinander und parallel zur Achse X an der flexiblen Membran (30) befestigt sind, wobei jedes Maßband (31a, 31b, 31c) in zwei Teile gefaltet montiert ist, wobei das erste Ende (16) eines jeden Maßbandes starr an der ersten Verankerung (5, 36) befestigt ist, und das zweite Ende (17) eines jeden Maßbandes starr an der zweiten Verankerung (6, 37) befestigt ist, welche fest mit dem Rotor (15, 33) verbunden ist.

7. Vorrichtung zum Entfalten und Zusammenfalten nach Anspruch 6, **dadurch gekennzeichnet, dass** die flexible Membran seitliche Latten (80, 84, 85) beinhaltet, die rechtwinklig zur Achse X sind, wobei die seitlichen Latten jeweils an jedem Maßband (31a, 31b, 31c) befestigt sind.

8. Vorrichtung zum Entfalten und Zusammenfalten nach einem der vorhergehenden Ansprüche, **dadurch gekennzeichnet, dass** sie zudem mindestens einen festen Stator (14, 32) beinhaltet und dadurch, dass die erste Verankerung (5, 36) fest mit dem Stator (14, 32) verbunden ist.

9. Vorrichtung zum Entfalten und Zusammenfalten nach einem der Ansprüche 1 bis 7, **dadurch gekennzeichnet, dass** die erste Verankerung (5, 36) fest mit dem Rotor (15, 33) verbunden ist und dadurch, dass die Vorrichtung zum Entfalten und Zusammenfalten zwei erste Rollen (21, 22) beinhaltet, welche einander gegenüber an einem festen Beschlag (13) montiert sind, welcher die Drehachse des Rotors (15, 33) stützt, und zwei zweite Rollen (23, 24), welche einander gegenüber am Beschlag (13) montiert sind, wobei der zweite Schenkel (12) des Maßbandes (10, 31a, 31b, 31c) zwischen den beiden ersten Rollen (21, 22) eingelassen ist, wobei der erste Schenkel (11) des Maßbandes (10, 31a, 31b, 31c) zwischen den beiden zweiten Rollen (23, 24) eingelassen ist.

10. Vorrichtung zum Entfalten und Zusammenfalten nach Anspruch 8, **dadurch gekennzeichnet, dass** sie mindestens zwei Maßbänder (10a, 10b) beinhaltet, welche einander entgegengesetzt auf einem gleichen Rotor (15, 33) montiert sind, wobei jedes Maßband (10a, 10b) in zwei Teile gefaltet montiert ist und zwei Enden (16a, 17a), (16b, 17b) beinhaltet, welche jeweils am gleichen Stator (14, 32) durch erste Verankerungen (5, 36) und am Rotor (15, 33) durch zweite Verankerungen (6, 37) befestigt sind.

11. Vorrichtung zum Entfalten und Zusammenfalten nach [Anspruch] 8, **dadurch gekennzeichnet, dass** sie mindestens drei Maßbänder (10c, 10d, 10f) beinhaltet, welche sternförmig am gleichen Rotor (15, 33) montiert sind, wobei jedes Maßband ((10c, 10d, 10f) in zwei Teile gefaltet montiert ist und zwei Enden beinhaltet, welche jeweils am gleichen Stator (14, 32) durch erste Verankerungen (5, 36) und am Rotor (15, 33) durch zweite Verankerungen (6, 37) befestigt sind.

12. Vorrichtung zum Entfalten und Zusammenfalten nach Anspruch 8, **dadurch gekennzeichnet, dass** sie mindestens zwei Statoren (43, 44) beinhaltet, welche parallel zur Achse Y sind, wobei die beiden Statoren beidseits des Rotors (33) montiert sind, und zwei flexible Strukturen (41, 42), welche einander entgegengesetzt am Rotor (33) montiert sind, wobei jede flexible Struktur (41, 42) eine flexible Membran (30) mit zwei Dimensionen XY beinhaltet und mindestens ein Maßband (10, 31a, 31b, 31c), welches in zwei Teile gefaltet an der flexiblen Membran (30) befestigt ist, wobei das Maßband (10, 31a, 31b, 31c) ein erstes Ende beinhaltet, welches starr an einem der beiden Statoren (43, 44) befestigt ist und ein zweites Ende, welches am Rotor (33) befestigt ist.

13. Vorrichtung zum Entfalten und Zusammenfalten nach einem der vorhergehenden Ansprüche, **dadurch gekennzeichnet, dass** das Maßband (10, 31a, 31b, 31c) ein Wellblech ist.

14. Entfaltbare, flexible Struktur, welche mindestens eine Vorrichtung zum Entfalten und Zusammenfalten nach einem der vorhergehenden Ansprüche beinhaltet.

15. Entfaltbare, flexible Struktur nach Anspruch 14, **dadurch gekennzeichnet, dass** sie zudem einen gelenkigen, entfaltbaren Mast (53) beinhaltet.

16. Entfaltbare, flexible Struktur nach Anspruch 15, **dadurch gekennzeichnet, dass** der gelenkige Mast (53) in der Lage ist, auf einer Plattform eines Satelliten (1) in Vermittlung eines Drehantriebsmotors (58) befestigt zu werden.

17. Entfaltbare, flexible Struktur nach einem der Ansprüche 14 bis 16, **dadurch gekennzeichnet, dass** sie zwei Rücken an Rücken beiderseits einer Mittelebene (60) der entfaltbaren Struktur montierte Solargeneratoren-Halbflügel (2a, 2b) beinhaltet, wobei die Mittelebene (60) senkrecht zur Entfaltungs- und Zusammenfaltungsachse X der beiden Halbflügel (2a, 2b) ist, und zwei unabhängige Vorrichtungen zum Entfalten und Zusammenfalten, welche jeweils den beiden Halbflügeln zugewiesen sind, wobei die beiden Vorrichtungen zum Entfalten und Zusammenfalten zwei jeweilige Rotoren (62a, 62b) beinhalten, wobei die beiden Rotoren (62a, 62b) jeweilige Drehachsen (63a, 63b) besitzen, die parallel zueinander sind.

18. Entfaltbare, flexible Struktur nach einem der Ansprüche 14 bis 16, **dadurch gekennzeichnet, dass** sie eine erste flexible Membran beinhaltet, welche an dem ersten Schenkel (11) des Maßbandes (10, 31a, 31b, 31c) befestigt ist, welches in zwei Teile gefaltet ist, und eine zweite flexible Membran, die am zweiten Schenkel (12) des gleichen Maßbandes (10, 31a, 31b, 31c) befestigt ist, wobei die erste flexible Membran erste Objekte (70) stützt und die zweite flexible Membran zweite Objekte (73) stützt, die sich von den ersten Objekten (70) unterscheiden.

19. Entfaltbare, flexible Struktur nach Anspruch 18, **dadurch gekennzeichnet, dass** die ersten Objekte (70) Solarzellen sind und die zweiten Objekte (73) Konzentrationslinsen des Lichts sind und dadurch, dass die zweite flexible Membran für Lichtstrahlen transparent ist.

20. Satellit, **dadurch gekennzeichnet, dass** er mindestens eine entfaltbare, flexible Struktur nach einem der Ansprüche 14 bis 19 beinhaltet.

## Claims

1. Device for unfurling and refurling a flexible structure comprising at least one tape spring (10) having an axis of unfurling and of refurling parallel to an axis X and a rotor (15, 33) rotatingly mobile about an axis Y perpendicular to the axis X, the tape spring (10) being able, autonomously, to pass from a state in which it is wound around the rotor (15, 33) to an unwound state, the tape spring (10) being mounted bent in two in a shape of a U with two branches (11, 12), wherein the tape spring comprises a first end (16) of a first branch (11) fixed rigidly to a first anchor point (5, 36) and a second end (17) of a second branch (12) fixed rigidly to a second anchor point (6, 37) secured to the rotor (15, 33), the first end (16) of the first branch (11) of the tape spring (10) being mounted between two jaws (18, 19) of the first anchor point (5, 36) and the device for unfurling further comprising at least one piece of spatial equipment to be unfurled while being fixed to the at least one tape spring.

2. Unfurling and refurling device according to claim 1, **characterized in that** the second anchor point (6, 37) consists of two jaws of complementing shapes (18, 19) mounted facing one another, the second end (17) of the second branch (12) of the tape spring (10) being mounted between the two jaws of the second anchor point (6, 37).

3. Unfurling and refurling device according to any one of claims 1 or 2, **characterized in that** it further comprises at least two rollers (21, 22) mounted facing one another on a fixed fitting (13) supporting the axis of rotation of the rotor (15, 33), the second branch (12) of the tape spring secured to the rotor (15, 33) being set in between the two rollers (21, 22).

4. Unfurling and refurling device according to any one of the preceding claims, **characterized in that** it further comprises an unfurling-speed regulating device (45) coupled to the rotor (15, 33).

5. Unfurling and refurling device according to any one of the preceding claims, **characterized in that** it further comprises at least one two-dimensional XY flexible membrane (30), the tape spring (10) being fixed to the flexible membrane (30) parallel to the axis X of unfurling and refurling of the tape spring (10).

6. Unfurling and refurling device according to claim 5, **characterized in that** it comprises at least two tape springs fixed parallel to one another and parallel to the axis X on the flexible membrane (30), each tape spring (31a, 31b, 31c) being mounted bent in two, the first end (16) of each tape spring being fixed rigidly to the first anchor point (5, 36) and the second end (17) of each tape spring being fixed rigidly to the second anchor point (6, 37) secured to the rotor (15, 33).

7. Unfurling and refurling device according to claim 6, **characterized in that** the flexible membrane comprises lateral battens (80, 84, 85) orthogonal to the axis X, the lateral battens being respectively fixed to each tape spring (31a, 31b, 31c).

8. Unfurling and refurling device according to any one of the preceding claims, **characterized in that** it further comprises at least one fixed stator (14, 32) and **in that** the first anchor point (5, 36) is secured to the stator (14, 32).

9. Unfurling and refurling device according to any one of claims 1 to 7, **characterized in that** the first anchor point (5, 36) is secured to the rotor (15, 33) and **in that** the unfurling and refurling device comprises two first rollers (21, 22) mounted facing one another on a fixed fitting (13) supporting the axis of rotation of the rotor (15, 33) and two second rollers (23, 24) mounted facing one another on the fitting (13), the second branch (12) of the tape spring (10, 31a, 31b, 31c) being set in between the two first rollers (21, 22), the first branch (11) of the tape spring (10, 31a, 31b, 31c) being set in between the two second rollers (23, 24).

10. Unfurling and refurling device according to claim 8, **characterized in that** it comprises at least two tape springs (10a, 10b) mounted in opposition on one and the same rotor (15, 33), each tape spring (10a, 10b) being mounted bent in two and comprising two ends (16a, 17a), (16b, 17b) which are fixed respectively to one and the same stator (14, 32) by first anchor points (5, 36) and to said rotor (15, 33) by second anchor points (6, 37).

11. Unfurling and refurling device according to claim 8, **characterized in that** it comprises at least three tape springs (10c, 10d, 10f) mounted in a star on one and the same rotor (15, 33), each tape spring (10c, 10d, 10f) being mounted bent in two and comprising two ends fixed respectively to one and the same stator (14, 32) by first anchor points (5, 36) and to said rotor (15, 33) by second anchor points (6, 37).

12. Unfurling and refurling device according to claim 8, **characterized in that** it comprises at least two stators (43, 44) parallel to the axis Y, said two stators being mounted one on either side of the rotor (33) and two flexible structures (41, 42) mounted in opposition on said rotor (33), each flexible structure (41, 42) comprising a two-dimensional XY flexible membrane (30) and at least one tape spring (10, 31a, 31b, 31c) fixed bent in two to the flexible membrane (30), the tape spring (10, 31a, 31b, 31c) comprising a first end fixed rigidly to one of the two stators (43, 44) and a second end fixed to the rotor (33).

13. Unfurling and refurling device according to any one of the preceding claims, **characterized in that** the tape spring (10, 31a, 31b, 31c) is a corrugated sheet.

14. Flexible unfurlable structure comprising at least one unfurling and refurling device according to any one of the preceding claims.

15. Flexible unfurlable structure according to claim 14, **characterized in that** it further comprises an unfurlable articulated mast (53).

16. Flexible unfurlable structure according to claim 15, **characterized in that** the articulated mast (53) is able to be fixed to a platform of a satellite (1) via a rotational-drive motor (58).

17. Flexible unfurlable structure according to an one of claims 14 to 16, **characterized in that** it comprises two solar array half-wings (2a, 2b) mounted back to back on either side of a mid-plane (60) of the unfurlable structure, the mid-plane (60) being perpendicular to the axis X of unfurling and of refurling of the two half-wings (2a, 2b) and two independent unfurling and refurling devices respectively dedicated to the two half-wings, the two unfurling and refurling devices comprising two respective rotors (62a, 62b), the two rotors (62a, 62b) having mutually parallel respective axes of rotation (63a, 63b).

18. Flexible unfurlable structure according to any one of claims 14 to 16, **characterized in that** it comprises a first flexible membrane fixed to the first branch (11) of the bent-in-two tape spring (10, 31a, 31b, 31c) and a second flexible membrane fixed to the second branch (12) of the same tape spring (10, 31a, 31b, 31c), the first flexible membrane supporting first objects (70) and the second flexible membrane supporting second objects (73) different from the first objects (70).

19. Flexible unfurlable structure according to claim 18, **characterized in that** the first objects (70) are solar cells and the second objects (73) are lenses that concentrate the light, and **in that** the second flexible membrane is transparent to rays of light.

20. Satellite **characterized in that** it comprises at least one flexible unfurlable structure according to any one of claims 14 to 19.
